# EUROPEAN PATENT SPECIFICATION

(11) **EP 4 120 223 B1**
(45) Date of publication and mention of the grant of the patent: **04.09.2024**
(21) Application number: 21185329.6
(22) Date of filing: 13.07.2021
(51) Int. Cl.: G06F 1/00, G06F 3/00, G05D 1/00, B64U 10/14, B64U 10/80, B64U 10/60, G06V 20/13, G06V 40/10, G08G 5/02, B64U 80/60, G06F 1/16, G06F 3/01, G06V 40/20, G08G 5/00

(54) **SYSTEM WITH WEARABLE BASE DEVICE AND UNMANNED VEHICLE**
SYSTEM MIT TRAGBAREM BASISGERÄT UND UNBEMANNTEM FAHRZEUG
SYSTÈME DOTÉ D'UNE BASE VESTIMENTAIRE PORTABLE ET VÉHICULE SANS PILOTE

(43) Date of publication of application: 18.01.2023
(73) Proprietor: Honda Research Institute Europe GmbH, 63073 Offenbach/Main (DE)
(72) Inventor: Einecke, Nils, 63073 Offenbach am Main (DE); Weigel, Martin, 63073 Offenbach am Main (DE)
(74) Representative: Beder, Jens

(56) References cited:
- US-A1- 2016 304 217
- US-A1- 2017 322 563
- US-A1- 2021 034 837

## Description

The invention is in the field of unmanned vehicles and support infrastructure for unmanned vehicles. In particular, a system comprising an unmanned vehicle and a wearable base device for the unmanned vehicle is proposed.

Unmanned vehicles (UV) are common in many application areas and in many different guises. Unmanned vehicles are available and may operate on the ground, in airspace, underwater or on the water surface, or even in space. Unmanned vehicles may operate fully autonomously as drones, semi-autonomously or under remote control as remotely piloted vehicles (RPVs).

A widely used class of unmanned vehicles are unmanned aerial vehicles (UAV). Unmanned aerial vehicles popular both with professional and amateur operators are small unmanned aerial vehicles in the classes of micro aerial vehicles or miniature unmanned aerial vehicles.

The term miniature unmanned aerial vehicles (MiniUAV) includes aerial vehicles ranging from micro unmanned aerial vehicles (MicroUAV) to unmanned aerial vehicles that can be carried and launched by a single human. Many different architectures exist, which range from fixed-wing designs, flying-wing designs, ducted fan designs, helicopter designs to popular quadcopter or multicopter designs. Unmanned aerial vehicles with sizes of some decimetres and having weights from a few hundred grams to some kilograms including payload prove their usefulness in many applications.

The term micro aerial vehicle denotes a class of miniature unmanned aerial vehicles that fulfil size and weight restrictions and may operate fully autonomously. Sizes of current micro aerial vehicles may be as small as 5 to 10 cm and they may weight only a few grams.

A key aspect of operability of unmanned aerial vehicles remains the take-off procedure (launch procedure) and the landing procedure (recovery procedure).

Usually, small unmanned aerial vehicles are carried close to the area of operation by a human operator, then put down on a suitable stretch of ground, and then the take-off process is performed. Sometimes, the take-off process is performed autonomously, even when the operator controls the unmanned aerial vehicle during normal flight operations by means of a remote control device. The landing process is vice versa, with the unmanned aerial vehicle landing on a suitable ground spot and after the successfully landing, the unmanned aerial vehicle is recovered manually by the operator. Some unmanned aerial vehicles implement a capability to, at least partially, take over control of the launch procedure and landing procedure in order to reduce a cognitive load on the human operator during these most challenging parts of the flight. However, a small unmanned aerial vehicle is still to be transferred from and to the operation area by hand. Moreover, the interaction capabilities of the unmanned aerial vehicle with the human operator are usually limited to the user interface of a remote control device.

US 9,696,725 B2 discloses a method for launching and landing an unmanned aerial vehicle. The method detects a positional change of the unmanned aerial vehicle. In response to the detected positional change, the unmanned aerial vehicle is activated, generates lift or thrust and accelerates in order to take off.

US 2016/0304217 A1 discloses personal Unmanned Aerial Vehicles (UAVs) and UAV universal docking ports "docking ports" to be incorporated into and/or attached to headwear, including helmets, hard hats and hats and face masks, as well as footwear including boots and shoes, clothing and outerwear, devices, gear and equipment, land, air, water and space vehicles, buildings, wireless towers and other mobile or stationary objects and surfaces referred to collectively as "docking stations". A docking station may have one or more docking ports for docking, networking and charging or refuelling compact personal UAVs, and for providing data communications between the UAVs and other electronic devices that remain with the person while the UAV is in flight or driving or landed on terrain. The docking ports may also incorporate wireless power transmission for remote wireless charging of one or more UAVs. Supplemental power for recharging the UAVs when docked may be supplied by integrated battery(s) in the docking port or me be provided directly from the docking station or other connected power source.

US 2021/0034837 A1 shows a remote control system and a method to support separate operation of an animal. The remote control system to support separate operation of an animal includes a drone, capable of performing a separation operation, a wearable device, in form of being wearable on an animal and configured for docking the drone, a server, configured for communicating at least one of the drone and the wearable device to gather information that at least one of the drone or and the wearable device collects, and configured for transmitting a user command to at least one of the drone or and the wearable device, and a user terminal, configured for receiving and outputting the gathered information in communication with the server, and configured for receiving the user command regarding the drone and the wearable device.

US 2017/0322563 A1 discloses launch-controlled unmanned aerial vehicles, and associated systems and methods. A computer-implemented method for operating an unmanned aerial vehicle in a representative embodiment includes detecting at least one parameter of a motion of the UAV as a user releases the UAV for flight. Based at least in part on the at least one detected parameter, the method can further include establishing a flight path for the UAV, and directing the UAV to fly the flight path.

There remain issues with operation and control of small unmanned vehicles, and in particular during and in connection with the launching and recovery of small unmanned vehicles, improving the discussed aspects of prior art.

A system including an unmanned vehicle and a wearable base device for the unmanned vehicle according to independent claim 1 provides a solution to the problem and even provides further advantages.

The dependent claims define further advantageous embodiments.

The system comprises an unmanned vehicle and a wearable base device for the unmanned vehicle, wherein the wearable base device comprises a position determining unit. The position determining unit is configured to determine a first position information of the wearable base device relative to a body of a person wearing the wearable base device and a second position information of the wearable base device relative to the body of the person. The wearable base device further comprises a first communication unit for transmitting the first position information or a launch signal generated based on the first position information, and the second position information of the wearable base device or a recovery signal generated based on the second position information to the unmanned vehicle. The unmanned vehicle comprises a second communication unit configured to receive the first position information or the launch signal, and the second position information or the recovery signal. The unmanned vehicle is configured to perform an autonomous launch manoeuvre of the unmanned vehicle from the wearable base device in response to receiving the first position information or the launch signal, and to perform an autonomous landing manoeuvre of the unmanned vehicle on the wearable base device in response to receiving the second position information or the recovery signal.

The first position information is generated by a positional change of a wearable device with regard to the body of the human operator and represents the launch command initiating an autonomous launching procedure of the unmanned vehicle. Alternatively, instead of the first position information, a dedicated launch signal could be generated based on the first position information and transmitted. Correspondingly, the second position information is generated by another positional change of a wearable device with regard to the body of the human operator and represents the landing command initiating an autonomous landing procedure of the unmanned vehicle at the wearable base device. Again, a recovery signal generated based on the second position information may be generated and transmitted. The operator may generate each the first and second position information by simple predetermined gestures with the wearable base device. Therefore, the operator initiates the launch procedure and the recovery procedure for the unmanned vehicle in a natural and effortless manner. Moreover, the unmanned vehicle uses a wearable base device and therefore avoids the need for searching or preparing a launch pad and -sometimes more difficult- a recovery area. Using the positional change of the wearable base device with regard to the body of the human operator in combination with the same wearable base device acting as a wearable landing platform provides even the possibility of using highly natural gesture with the wearable base device, which appears to offer a clear take-off path or a clear landing path as the first and second information respectively.

It is to be noted that the following explanations referred to transmission of the first position information and the second position information only but using a launch signal and a recovery signal instead may be performed in an analogous way. For achieving a concise description, the launch signal and recovery signal may only be explicitly mentioned where necessary.

The wearable base device itself is adapted to determine its positional change with regard to the body of the human operator, therefore the positional relationship of a launching and landing pad provided by the wearable base device, and the most sensitive obstacle presented by the human operator itself in close proximity to the launching and landing pad is taken into regard when initiating the launching procedure by the first information or the landing procedure by the second information.

Using the wearable base device dispenses with the need for identifying and preparing a suitable take-off and landing zones in the operation environment, and time-consuming steps of setting the unmanned vehicle up for take-off and -regularly more burdensome- of recovery of the landed unmanned vehicle.

In the system according to an embodiment at least one of the wearable base device and the unmanned vehicle is configured to determine a posture of the person and to determine a posture model of the person based on the determined posture of the person for a collision-free path planning of the unmanned vehicle during the autonomous landing manoeuvre and the autonomous launch manoeuvre. Thus, an autonomous launch and recovery procedure taking account of the spatial relationship between flight path of the unmanned vehicle and the sensitive portions of the body of the human operator, although acting in close proximity, is possible.

At least one of the wearable base device and the unmanned vehicle can be configured to determine a movement of the person, and to determine a movement model of the person based on the determined movement of the person for a collision-free path planning of the unmanned vehicle during the autonomous landing manoeuvre and the autonomous launch manoeuvre. Thus, a safe autonomous launch and recovery procedure taking account of the dynamically changing spatial relationship between flight path of the unmanned vehicle and the sensitive portions of a potentially moving human operator, although acting in close proximity with each other, is possible.

In an advantageous embodiment, the system is configured to select an approach path of the unmanned vehicle towards the person wearing the wearable base device, wherein the approach path is adapted to enable an early visual and/or audible detection of the approaching unmanned vehicle by the person. Thus, the person (human operator) is able to detect the approach early, and brace himself for the landing process without being surprised, in particular by the autonomously operating unmanned vehicle. Recognizing the approaching unmanned vehicle, the operator may even be able to provide further instructions, for example, to abort a landing attempt, when he determines to do so based on his observations. Acceptance of the unmanned vehicle operating partially in very close proximity of the human operator will be increased.

The selected approach path of the unmanned vehicle towards the person wearing the wearable base device advantageously approaches the person from a front side of a head of the person and maintains a minimum distance towards ears of the person. Therefore, key mental obstacles for accepting operation of an unmanned vehicle close to the human head are taken into account, the unmanned vehicle is clearly visible for the human operator, and safety margins with respect to sensitive parts of the human head, and with respect to human sensory susceptibilities are recognized.

The position determining unit of an embodiment of the system includes at least one of an accelerometer sensor, a gyroscope and a time-of-arrival sensor.

Thus, the sensor signals these specific and widely available sensors arranged on the wearable base device provide, enable to estimate particular poses of the human operator, which enable to determine the first information and the second information based thereon in an efficient manner.

The unmanned vehicle of an embodiment of the system is configured to perform the autonomous launch manoeuvre and the autonomous landing manoeuvre at the wearable base device and at least one further wearable base device worn by at least one other person. This particular embodiment provides the capability to transfer small physical objects from one person to another, or to provide a data transfer capability for transferring large amounts of data in situations were no other communication infrastructure is available, for example, when restrictions imposing radio silence are valid.

The unmanned vehicle may be configured to perform the autonomous launch manoeuvre and the autonomous landing manoeuvre at the wearable base device and at least one further wearable base device worn by the person. Thus, one single human operator may employ plural unmanned vehicles, may employ plural different types of unmanned vehicles, each type optimized or suited for a particular use scenario, or the wearable base devices have different properties, for example, different shielding from high or low temperatures, shielding from humidity, water-resistant or even waterproof wearable base devices, or providing alternate landing pads for the unmanned vehicle when one landing pad is not available for some reasons.

The system according to an advantageous embodiment includes the unmanned vehicle configured to share the wearable base device with a further unmanned vehicle. Thus, the human operator may use a single wearable base device for operating swarms of unmanned vehicles and thereby increase the number of possible application scenarios significantly beyond the single wearable platform device and single unmanned vehicle presenting a base scenario.

The wearable base device according to an embodiment of the system is configured to charge an energy storage of the unmanned vehicle. Thus, a single unmanned vehicle may redeploy to operations after charging its depleted on-board energy storage without having to transfer far from its area of operations or being returned to a dedicated charging facility. The time between missions of a single unmanned vehicle may decrease significantly. The number of required available unmanned vehicles for achieving a predefined result may be smaller.

The system according to an embodiment comprises the wearable base device configured to connect with an auxiliary energy storage. The auxiliary energy storage connected to the wearable base device enables to rely on a significant amount of energy for recharging the unmanned vehicle, while simultaneously the weight characteristics of the wearable base device are not adversely affected by having to integrate the heavy and large energy storage, for example a rechargeable battery, into the wearable base device itself. Degrees for freedom of design for the system are maintained, while operational characteristics are improved. This is particular advantageous when taking into consideration, that operating the system relies on a human machine interface that involves a positional relationship of the wearable base device relative to the human operators body.

The wearable base device according to an embodiment comprises attachment means configured to attach the unmanned vehicle mechanically to the wearable base device, in particular a platform of the wearable base device.

In combination with the feature of implementing the base device providing a landing and starting platform as wearable base device, which is worn by the human operator on his body, the attachment means for mechanically attaching and thereby fixating the landed unmanned vehicle to the wearable base device enables the human operator to move freely until proceeding to actually start the unmanned vehicle. This is also particularly advantageous in case of the wearable base device has the form of a bracelet worn on the lower arm of the human operator.

Advantageously, the attachment means is configured to attach the unmanned vehicle to the wearable base device actively and/or automatically and/or the attachment means includes a gripping member or an electromagnet. Adding to the wearable base device an attachment means, which actively attaches ("grips") the unmanned aerial device, realizes a preferred embodiment, that increases the probability of a successful landing and recovery of the unmanned vehicle, as a required precision for the final approach path during landing may be reduced. Furthermore, an automatic release of the fixation as, for example, an electromagnet provides, enables smooth transition from a fixated position of the unmanned vehicle at the wearable base device up to launch of the unmanned vehicle, even fully autonomously, and without the human operator releasing a transport lock before starting the unmanned vehicle. Handling characteristics of the system increase therefore considerably.

According to an embodiment of the system, the attachment means includes an electric connecting means configured to connect the unmanned vehicle with the wearable base device electrically, electromagnetically or optically for data transfer, in particular for a high-speed data transfer.

Transfer of large amounts of data in a short time, for example image data acquired by an unmanned vehicle equipped with a camera in only a short time becomes possible in a standby position at the wearable base station. Preferably, a wired electrical connection is used, suited for reliable and secure data transmission.

The wearable base device according to an embodiment comprises a cover configured to cover the unmanned vehicle in an attached position to the wearable base device mechanically.

Providing a protective cover for the unmanned vehicle when it is in an attached position at the wearable base station (standby position) enables to protect the unmanned vehicle from humidity, rain, snow, low or high temperatures, dust or similar environmental hazards. Even more the cover shielding the unmanned vehicle in the attached position at the wearable base station enables the human operator to move more freely over difficult terrain, through forested areas with undergrowth, or infested with bushes. The cover withholds effectively these environmental effects from the most sensitive element of the system, the unmanned vehicle.

The cover may be configured to automatically and/or actively cover or uncover the unmanned vehicle when in an attached position to the wearable base device.

Covering or uncovering the unmanned vehicle in an attached position to the wearable base device simplifies handling of the system, enables safe and reliable operation by untrained or poorly trained operators or operators under particular stress. An automatic cover achieves a fully automated launch procedure and retrieval procedure of the unmanned vehicle.

According to an embodiment of the system, the wearable base device comprises a launching means configured to at least support the unmanned device during launch by applying kinetic energy to the unmanned device.

A launching support like a catapult enables to separate reliably the unmanned vehicle from the wearable base device during the launch procedure, and advantageously, to even clear the immediate vicinity of the human operator wearing the wearable base device without starting its rotors, propellers or other propelling means presenting a risk to the human operator. Thus, the launching means avoids endangering the human operator during launch of the unmanned vehicle.

The unmanned device may be an unmanned aerial device, an unmanned water vehicle, an unmanned underwater vehicle, or an unmanned space vehicle.

The combination of features of the embodiments of the system enable to design advantageous unmanned vehicles such as unmanned aerial vehicles, but also unmanned water vehicles cooperating with swimmers, unmanned underwater vehicles cooperating with divers or unmanned space vehicles collaborating with astronauts in a space environment.

The discussion of embodiments of the system refers to the enclosed figures:
- Fig. 1: depicts a simplified overview of the system comprising an unmanned aerial vehicle and a wearable base station and its major components according to an embodiment.
- Fig. 2: illustrates the human machine interface for launch and recovery commands according to an embodiment.
- Fig. 3: illustrates a scenario and capabilities including plural users according to an embodiment.
- Fig. 4: illustrates a system according to an embodiment comprising plural wearable base devices.
- Fig. 5: illustrates a system according to an embodiment comprising plural unmanned aerial vehicles operating with a single wearable base device.
- Fig. 6: illustrates a system according to an embodiment performing high-speed data transmission.
- Fig. 7: illustrates a system according to an embodiment performing charging of the unmanned aerial vehicle.
- Fig. 8: shows a flowchart describing the launch procedure according to an embodiment.
- Fig. 9: shows a flowchart describing initiating recovery procedure according to an embodiment.
- Fig. 10: shows a flowchart describing the landing procedure according to an embodiment.
- Fig. 11: shows a flowchart terminating the recovery procedure according to an embodiment.

In the figures, same reference signs in different figures show same or corresponding elements. A discussion of same reference signs in different figures is omitted whenever possible without adversely affecting clarity.

The following description uses the example of an unmanned aerial vehicle (UAV) as an example or illustrating features and advantages, but the unmanned vehicle is not limited to the unmanned aerial vehicle.

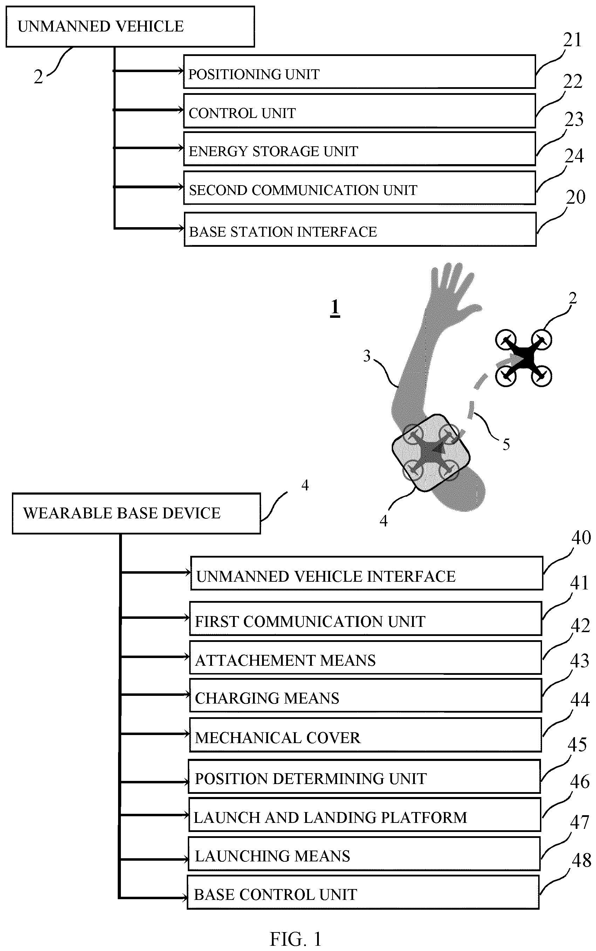

Fig. 1 depicts a simplified overview of the system 1 comprising an unmanned vehicle 2 and a wearable base device 4 and its major components according to an embodiment. The discussion of components of the unmanned vehicle 2 in particular concentrates on those components, which play a particular role when implementing the system 1 including the unmanned vehicle 2 and the wearable base station 4. The unmanned vehicle 2 includes further components and structural units, for example, drive means, a vehicle body, navigation means, flight control means for stabilizing a flight, a mission payload tailored to the specific mission of the unmanned vehicle 2. These further components of the unmanned vehicle 2 will only be mentioned cursorily when their contribution to the interaction between human operator, wearable base station 4 and unmanned vehicle 2 might require such reference. The discussion of the wearable base station 4 follows corresponding considerations.

The unmanned vehicle 2 may start during a launch procedure (launch manoeuvre) from the wearable base device 4 and land on the wearable base device 4 during a recovery procedure (recovery manoeuvre). The unmanned vehicle 2 moves along a path 5 (trajectory 5), e.g. a launch path, an approach path or a landing path, in the environment.

The system 1 including an unmanned vehicle 2 and a wearable base device 4 enables to implement a natural interaction and control scheme for operation, and in particular, the operational phases of launching the unmanned vehicle 2 and of recovering the unmanned vehicle 2. The basic concept is to have the unmanned vehicle 2 being attached to a wearable base device 4, which includes a platform 46 (launch and landing platform) worn by a human operator. The human operator may wear the wearable base device 4 attached to an arm 3, on a shoulder or on the back, for example. The wearable base device 4 may be attached to the body of the human operator using fastening means like straps or tape. Fixating the wearable base device 4 to the human body may be supported, or even achieved, by a specific form design of the wearable base device 4.

The wearable base device 4 may include a bracelet or have the form of a gauntlet. Alternatively, the wearable base device 4 is integrated with a hat or helmet.

The wearable base device 4 includes a first communication unit 41. The first communication unit 41 is configured for a bidirectional communication to a second communication unit 24 of the unmanned vehicle 2. The first communication unit 41 may, in particular, transmit to and receive from the second communication unit 24 control data during operation of the unmanned vehicle 2, during a launch procedure of the unmanned vehicle 2, during a recovery procedure of the unmanned vehicle 2, and when the unmanned vehicle 2 is attached to the wearable base device 4 in a standby mode (standby position).

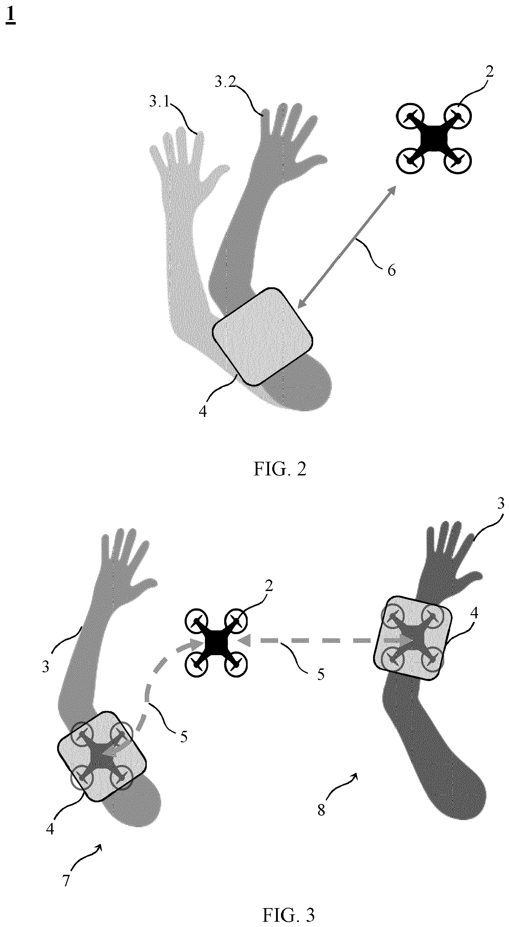

The communication link 6, depicted in Fig. 2, between first communication unit 41 and second communication unit 24 may use standard wireless technology, e.g., Wi-Fi, well suited due to its range and link stability.

The communication link 6 between unmanned vehicle 2 and wearable base device 4 transmits relevant data, like images data of a camera, to the wearable base device 4 of the human operator wearing the wearable base device 4 so that the data is available for further data processing. The wearable base device 4 uses the communication link 6 to transmit data on the predicted human body pose, body movements to the unmanned vehicle 2. The unmanned vehicle 2 may use the received data to adjust and improve take-off and landing manoeuvres during the launch procedure and during the recovery procedure, for example, for planning a path 5.

The wearable base device 4 includes a base control unit 48. The base control unit 48 controls functions for controlling the human machine interface implemented in order to control the operation of the system 1. The base control unit 48 further executes processing concerning the communication of data between the wearable base device 4 and the unmanned vehicle 2 via the first communication unit 41 to the second communication unit 24 of the unmanned vehicle 2.

The human machine interface for initiating the launch procedure of the unmanned vehicle 2 and initiating the recovery procedure of the unmanned vehicle 2 bases on a concept of natural interaction between the human operator and the unmanned vehicle 2. For example, lifting and holding the arm 3 up in a predetermined position may signal the unmanned vehicle 2 to initiate the launch procedure (take off). Lifting and holding the arm 3 up while the unmanned vehicle 2 is in the air can signal the unmanned vehicle 2 to start the recovery procedure (landing). The wearable base device 4 comprises sensors in the position determining unit 45 in order to determine a pose of the wearable base device 4. Determining the pose of the wearable base device 4 enables the base control unit 48 to detect predetermined gestures of the human operator based on the determined pose, or a sequence of poses. The base control unit 48 then transmits the determined launch command (launch signal) or the determined recovery command (recovery signal) via the first communication unit 41 to the second communication unit 24 of the unmanned vehicle 2.

The wearable base device 4 comprises attachment means 42, which ensures a tight coupling and fixating of the unmanned vehicle 2 to the wearable base device 4 and, in particular, its platform 46.

The wearable base device 4 may use the attachment means 42 to fixate the unmanned vehicle 2 in a standby position on a platform 46 of the wearable base device 4. The attachment means 42 may include passive means, e.g., with Velcro tape or magnets, or preferably active means, e.g., grippers or electromagnets, which are preferably controlled by the base control unit 48.

In particular, the base control unit 48 controls the active attachment means 42 according to the current state of the launch procedure or the recovery procedure, and fully automatically, without necessary interference by the human operator.

The wearable base device 4 may comprise charging means 43.

The charging means 43 may recharge an energy storage unit 23 of the unmanned vehicle 2 in standby position at the wearable base device 4 via the unmanned vehicle interface 40 and the base station interface 20 with energy, preferably electric energy. The wearable base device 4 may include own energy storage means, and/or being connected to an auxiliary energy storage means for power supply and for transferring power to the unmanned vehicle 2.

The wearable base device 4 comprises a cover 44 (mechanical cover).

The wearable base device may use the cover 44 in order to protect the unmanned vehicle 2, in particular with an active cover 44. Once the unmanned vehicle 2 has landed, and is in a standby position at the wearable base device 4, the wearable base device 4 may automatically arrange the cover 44 as a protective shield over the unmanned vehicle 2. The cover 44 may include a structure similar to a folding fan.

The cover 44 prevents damage to the unmanned vehicle 2, e.g. when accidentally touching with the arm 3 some obstacle in the environment. Furthermore, the cover 44 reduces the stress on the fixation mechanism of the attachment means 42.

The wearable base device 4 comprises a position determining unit 45.

The position determining unit 45 may comprise an inertial measurement unit (IMU). The IMU detects linear acceleration using one or more accelerometer sensors, and rotational rate using one or more gyroscope sensors. The IMU may include a magnetometer sensor, which may provide a directional heading reference. Typically, the configuration of the IMU comprises one accelerometer, gyro, and magnetometer per axis for each of the three principal axes in space, providing data on pitch, roll and yaw angles.

Additionally or alternatively, the position determining unit 45 may comprise a radiolocation system using time-of-arrival measurements (TOA measurements) to perform geopositioning via true-range multilateration. A true range or distance can be directly calculated from the TOA as signals travel with a known velocity. Performing TOA on signals from two base stations will narrow a position of the position determining unit 45 to a position circle, data from a third base station is required to determine the accurate position as a single point. Techniques such as TDOA employ pseudorange multilateration using a measured time difference between TOAs.

The position determining unit 45 generates position data of the wearable base device 4.

The wearable base device 4 comprises a launch and landing platform 46.

The platform 46 supports launching and landing of the unmanned vehicle 2.

A shape of the platform 46 may provide a planar area (landing pad) for the unmanned vehicle 2. Alternatively, the platform 46 may include an arrangement of bars and/or hooks, which enable the unmanned vehicle 2 to attach itself thereto during the recovery procedure.

The platform 46 does not need to cover a whole landing area of the unmanned vehicle 2. For example, the unmanned vehicle 2 might land on and start from a hook-like device that is smaller than the unmanned vehicle 2. The unmanned vehicle 2 may partially rest on the platform 46, e.g. the hook, and the body of the human operator may partially stabilize the unmanned vehicle 2 in the standby position.

The wearable base device 4, and in particular the platform 46 may be integrated with clothing or other objects, e.g. a load bearing harness worn on the body or parts of the body of the human operator. In this context, typical parts of the body may be the lower or upper arm 3, the upper leg, the head, or the back of the human operator.

Fig. 1 shows a wearable base device 4 with a platform 46, the wearable base device 4 essentially having a bracelet as a platform 46. Alternative types of platforms 46 are also possible.

For example, a large platform worn like a backpack is suitable for unmanned vehicles 4 having larger dimensions.

Alternatively, a shape of a hat or helmet worn on the head of the operator enables an undisturbed take-off and landing of the unmanned vehicle 2.

Alternatively, a particular suit may include multiple landing points on several platforms 46.

Unmanned vehicles 2 with larger dimensions may require a corresponding layout of the platforms 46. The platform 46 may have the capability to extend and shrink itself. An extending mechanism for such platforms 46 may base on inflation, folding or stretching operations for deploying the platform for landing of the unmanned device 2.

Particular types of wearable base devices 4 with the platform 46 might enable or require other body poses or gestures to provide the launch signal (launch command) and the recovery signal (recovery command) from the human operator to the system 1. For example, the backpack-type wearable base device 4 might interpret the launch signal and the recovery signal when the human operator bends forward. For example, the wearable base device 4 worn on an upper leg of the human operator may recognize the launch signal or the recovery signal when the human operator bends his knees and brings the upper limb into a nearly horizontal position while resting on one knee.

The wearable base device 4 can either be shaped in a way that it can be worn only on one position on the body of the human operator, or the human operator can manually configure the position of the wearable base device 4 relative to his body. Alternatively or additionally, the wearable base device 4 may use its sensors and a human model to estimate its position on the body. Such estimations could be improved by further using human gait models.

The wearable base device 4 may comprise a launching means 47.

The launching means 47 may include an arrangement of springs, or an electromagnet, configured to apply a directed force to the unmanned vehicle 2 under control of the base control unit 48. Thereby the launching means 47 provides kinetic energy to the unmanned vehicle 2 during an initial phase of the launching procedure.

The launching means 47 may include a catapult mechanism using a spring or bowstring to propel the unmanned vehicle 2 onto its initial launching path. This preserves energy stored by the energy storage unit 23 of the unmanned vehicle 2, and even enables it to start propulsion means late, e.g. after clearing the immediate space around the human operator, which reduces risk of hurting the human operator during the launch procedure.

The unmanned vehicle 2 comprises a positioning unit 21 for generating position information on a location of the unmanned vehicle 2 and to provide data for performing path planning.

The unmanned vehicle 2 comprises a control unit 22. The control unit 22 will include at least one processor, microprocessor or signal processor, and their peripheral equipment, e.g. memories. The control unit 22 controls operation of the unmanned vehicle 2, and, in particular, controls the launching procedure and the recovery procedure of the unmanned vehicle 2. From a viewpoint of the unmanned vehicle 2, the recovery procedure corresponds to landing process on the wearable base device 4, in particular on the platform 46.

The control unit 22 is configured to communicate via the second communication unit 24 and the communication link 6 with the first communication unit 41 of the wearable base device 4.

The unmanned vehicle 2 comprises an energy storage unit 23. The energy storage unit 23 may include a rechargeable battery for storing electric energy, for example for supplying drive means (propulsion means, motors) of the unmanned vehicle 2, but also for consumers such as the control unit 22, the second communication unit 24, or the positioning unit 21.

The energy storage unit 23 may be recharged externally via a base station interface 20 of the unmanned vehicle 2. The base station interface 20 can provide a mechanical connection between the unmanned vehicle 2 and the wearable base station 4, an electrical connection for a data transfer between the unmanned vehicle 2 and the wearable base station 4, and an electrical connection for transferring electric energy between the wearable base station device 4 and the unmanned vehicle 2.

The base station interface 20 and the corresponding unmanned vehicle interface 40 of the wearable base device 4 may include mechanical connecting means for implementing an actively and/or automatically operating mechanic fixation of the unmanned vehicle 2 to the wearable base device 4, in particular the platform 46.

The base station interface 20 and the corresponding unmanned vehicle interface 40 may implement a wireless energy transfer capability for transfer of electric energy between the unmanned vehicle 2 and the wearable base device 4, for example by induction coils. Additionally or alternatively, the base station interface 20 and the corresponding unmanned vehicle interface 40 comprise a corresponding connector and socket for a wired electric connection between the base station interface 20 and the corresponding unmanned vehicle interface 40 for transferring electric energy.

The base station interface 20 and the corresponding unmanned vehicle interface 40 may implement a wireless data transmission capability between the unmanned vehicle 2 and the wearable base device 4, for example by using near field communication (NFC). Additionally or alternatively, the base station interface 20 and the corresponding unmanned vehicle interface 40 comprise a corresponding connector and socket combination for wired data communication between the base station interface 20 and the unmanned vehicle interface 40. The data communication between the base station interface 20 and the corresponding unmanned vehicle interface 40 preferably enables a high-speed data communication.

Fig. 2 illustrates the human machine interface implemented by the system 1 for launch and recovery commands according to an embodiment.

The basic concept of the system 1 involves using the unmanned vehicle 2 as part of a standard equipment for the human operator. The human operator, e.g., a rescuer or firefighter, puts on the wearable base device 4, e.g., a bracelet supporting the platform 46 when they equip for an operation. Putting on a bracelet requires only a short time, which is advantageous due to the urgent nature of such operations. The unmanned vehicle 2 is already attached to the wearable base device 4, e.g. by using a gripping mechanism. Furthermore, the wearable base device 4 covers the unmanned vehicle 2 with the cover 44. The cover 44 prevents damage to the unmanned vehicle 2, e.g. when accidentally touching with the arm 3 some obstacle in the environment. Furthermore, the cover 44 reduces the stress on the fixation mechanism of the attachment means 42.

When arriving at an operation area, the human operator lifts his or her arm 3 from a lower position 3.1 into an upper horizontal position 3.2. The wearable base device 4, respective the position determining unit 45 recognizes the upper arm position and determines a launch command. In response to the recognized launch command, the wearable base device 4 will cause the unmanned vehicle 2 to power up, retract the cover 44 and signal via a communication link 6 to the unmanned vehicle 2 to launch. Upon start of the unmanned vehicle 2, the attachment means 42, e.g. the gripping mechanism of the wearable base device 4, is released. Signalling the unmanned vehicle 2 to launch may be caused either by transmitting position information indicating a launch position of the wearable base device 4 or by generating, in the wearable base device 4, a launch signal and transmitting the launch signal to the unmanned vehicle 2. In case of only transmitting position information to the unmanned vehicle 2, unmanned vehicle 2 is configured to determine from the position information that launch of the unmanned vehicle 2 shall be initiated.

The unmanned vehicle 2 may perform, after a successful launch procedure, a predetermined automatic mission program autonomously, or under manual remote control. The mission program may be a surveillance program involving an automated aerial scan of a specific region in the environment.

After some time elapsed, the unmanned vehicle 2 returns to a location of the wearable base device 4 and waits for the human operator to bring the arm 3 again in an upper horizontal position 3.2.

In case of unforeseen emergencies, the human operator can command the wearable base device 4 to return by bringing his arm 3 into the upper horizontal position 3.2 from the lower position 3.1. The wearable base device 4 recognizes this gesture as a retrieval command when the unmanned vehicle 2 is not at the wearable base device 4 and communicates the retrieval command via the link 6 to cause the unmanned vehicle 2 to land. For communicating the retrieval command, either respective position information or a dedicated recovery signal may be transmitted to the unmanned vehicle 2.

The communication link 6 between unmanned vehicle 2 and wearable base device 4 enables to transmit data to the human operator wearing the wearable base device 4. The wearable base device 4 uses the communication link 6 to transmit information about the predicted human body pose and body movements to the unmanned vehicle 2. The unmanned vehicle 2 may use this data to adjust and improve the starting and landing manoeuvres. The posture and motion prediction may base on general information of the human operator's body stored in a database, e.g. including his body height and shape, a position of the wearable base device 4 on or relative to the human operator, and may base on data from sensors worn on the body of the human operator, that estimate position and orientation of the body part. These sensors may include in particular the position determining unit 45, IMUs, or even strain gauges. These sensors form part of the wearable base device 4 and may embedded inside the wearable base device 4.

Additionally data of these sensors can be fused with data from other wearable devices, for example sensors of smartwatches, smart glasses or further wearable base devices 4.

Recovery of the unmanned vehicle 2 is done automatically in the recovery procedure. When the unmanned vehicle 2 approaches the wearable base device 4 transmits position information including its position and orientation data acquired by its sensors in the position determining unit 45 over the communication link 6 to the unmanned vehicle 2. This may support the unmanned vehicle 2 in locating the wearable base device 4 and improving a landing accuracy at the platform 46. The unmanned vehicle 2 may constantly update its location estimation while performing landing during the recovery procedure. Upon the unmanned vehicle 2 touching the wearable base device 4, in particular the platform 46, the wearable base device 4 senses the landed unmanned vehicle 2, and subsequently engages the attachment means 42, e.g. the gripping mechanism, in order to fixate the unmanned vehicle 2 at or on the platform 46. Then the unmanned vehicle 2 shuts its propulsion mechanism down, e.g. disengages its rotors in case of the quadcopter. If the unmanned vehicle 2 is intended to remain in standby, the human operator may move his arm into a lower position 3.1. The wearable base device 4 may close the cover 44 in order to protect the unmanned vehicle 2 in the standby position at the platform 46.

Similar to an interaction between a falconer and his bird, lifting the arm of the human operator signals the unmanned vehicle 2 to launch. Similarly, lifting the arm while the unmanned vehicle 2 is in the vicinity, signals the unmanned vehicle 2 to return and land on the wearable base device 4.

For estimating the pose of the human operator, raw sensor readings provided by the position determining unit 45 can be used. It may be advantageous, if the base control unit 48 uses a human model in order to get a more precise and stable estimation of the pose and determining the gestures of the human operator. The human model allows generating a 3D obstacle structure for path planning of the unmanned vehicle 2, to generate a path 5 in the close vicinity of the human operator to avoid collisions with the body of the human operator during the launch procedure and the recovery procedure.

There exist different types of a human model. The human model may be a posture model, e.g. a stick figure model with joints, which represents the posture of a human operator for a given time.

The human model may be a dynamic movement model, e.g., a time series of stick figures with joints, which predicts the expected movement of the human body for a certain time horizon. This dynamic model enables the unmanned vehicle 2 to land on the wearable platform device 4 even in a scenario in which the human operator is moving. The dynamic movement model is suitable to anticipate a human motion and plan its landing trajectory accordingly. Like the posture model, the dynamic movement model can be used for avoiding collisions with the body of the human operator. Both human models support minimizing a risk of a collision with the human operator, improving an accuracy of the automated launch and landing manoeuvres of the unmanned vehicle 2. Both human models may be used to optimize the landing path 5 (landing trajectory) for human comfort, e.g., minimizing a perceived loudness of the unmanned vehicle 2 and choosing visible approach paths 5 in order to avoid surprising the human operator.

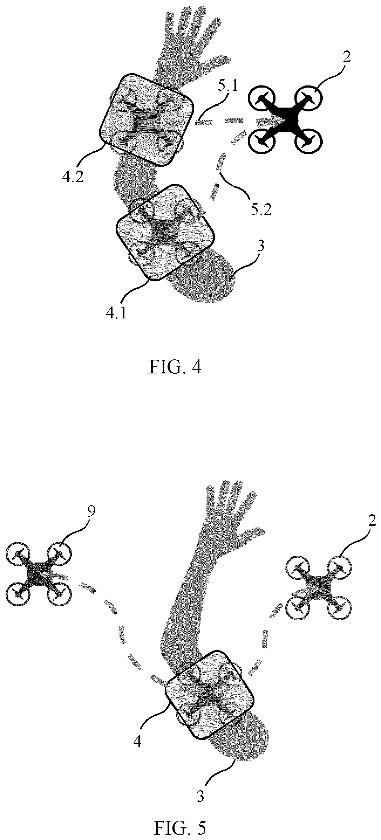

The system 1 may extend to application scenarios including multiple unmanned vehicles 2 shown in fig. 5, multiple wearable base devices 4 as illustrated in fig. 4, or multiple human operators as illustrated in fig. 3.

Fig. 3 illustrates a scenario and capabilities involving plural persons each being equipped with a wearable base device 4 according to an embodiment.

The unmanned vehicle 2 may move from a first wearable base device 4 worn by a first person 7 to a second wearable base device 4 worn by a second person 8. One advantageous application scenario is the transfer of data using a data storage capacity of the unmanned vehicle 4 in combination with the capability to transfer data via the base station interface 20 and the unmanned vehicle interface 40, between the wearable base device 4 of the first person 7, the unmanned vehicle 2, and the wearable base device 4 of the second person 8 and vice versa.

Additionally or alternatively, the unmanned vehicle 2 may deliver physical objects, e.g. small items, exploiting a load carrying capacity of the unmanned vehicle 2 from the first person 7 to the second person 8.

Fig. 4 illustrates a system 1 according to an embodiment comprising plural wearable base devices 4.1, 4.2.

Fig. 5 illustrates a system 1 according to an embodiment comprising plural unmanned vehicles 2, 9 operating with a single wearable base device 4.

One human operator may wear multiple wearable base devices 4.1, 4.2. The wearable base devices 4.1, 4.2 either can support multiple unmanned vehicles 2, or the wearable base devices 4.1,4.2 may support unmanned vehicles 2, 9 of different types. Unmanned vehicles 2, 9 of different types may have respectively different operational characteristics, such their ability to operate under extreme temperatures or having different levels of water resistance.

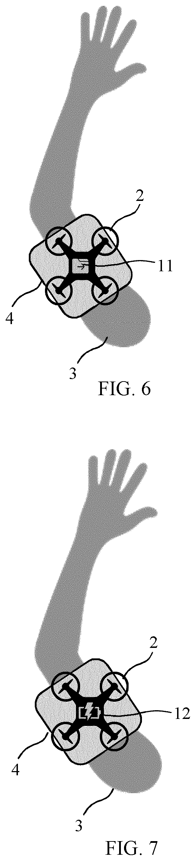

Fig. 6 illustrates a system 1 according to an embodiment performing high-speed data transmission.

Unmanned vehicles 2 in a surveillance role may gather large amounts of data during a short time, in particular including image data acquired by camera sensors. The unmanned vehicle interface 40 of the wearable base device 4 and the base station interface 20 of the unmanned device 2 may be adapted to perform a fast data transfer from unmanned vehicle 2 to the wearable base device 4, when the unmanned vehicle 2 is in the standby position at the wearable base device 4.

The data transfer may be realized with a wired connection. Once the unmanned vehicle 2 is fixated to the platform 46, e.g., by an active fixation, a wired or a wireless connection between unmanned vehicle 2 and wearable base device 4 can be established, preferably automatically, and the data transfer be performed.

Fig. 7 illustrates a system according to an embodiment performing charging of the unmanned vehicle 2.

The wearable base device 4 may be connected with an auxiliary energy storage, e.g. a large battery the human operator may wear as a backpack, and which may provide enough electric energy for multiple charging cycles of the energy storage unit 23 of the unmanned vehicle 2. This enables an operation with higher endurance due to regular recharging even for a small unmanned vehicle 2 with only low-capacity energy storage units 23.

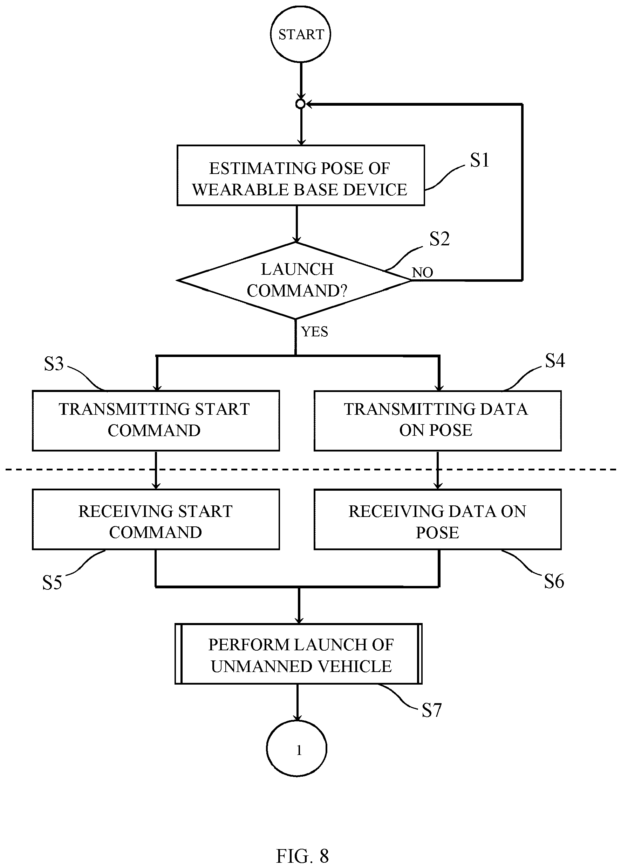

Fig. 8 shows a flowchart describing the launch procedure according to an embodiment.

The depicted process starts with the unmanned vehicle 2 in a standby position at the wearable base device 4.

Steps S1 to S4 are steps performed by the wearable base device 4.

In step S1, the wearable base device 4 estimates the pose of wearable base device 4, in particular using the position determining unit 45 and processing of the base control unit 48.

In step S2, the base control unit 48 determines whether or not, the human operator gave a launch command based on the estimated pose of the wearable base device 4. If the answer in step S2 is NO, the process returns to step S1.

If the answer in step S2 is yes, the base control unit 48 of the wearable base device 4 proceeds to steps S3 and S4.

In step S3, the base control unit 48 generates a launch command for the unmanned vehicle 4. The base control unit 48 provides a respective launch signal or first position information via the first communication unit 41 and the communication link 6 to the unmanned vehicle 2.

In step S4, the base control unit 48 generates a data signal including data on the determined pose of the wearable base device 4. The base control unit 48 provides the generated data signal via the first communication unit 41 and the communication link 6 to the unmanned vehicle 2.

The unmanned vehicle 2 performs steps S5 to S7.

The processing continues by the second communication unit 24 of the unmanned vehicle 2 receiving the launch command in step S5. Furthermore, the second communication unit 24 receives the data signal including data on the determined pose of the wearable base device 4 in step S6.

After receiving the launch command and the data signal including the data on the determined pose, the unmanned vehicle 2 performs the launch procedure in step S7.

The launch procedure may include the control unit 22 using the received data on the determined pose of the wearable base device 4 to improve the launch procedure, e.g. by determining a launch path 5 away from the wearable base device 4 with a minimized collision probability between the unmanned vehicle 2 and the wearable base device 4.

It is to be noted, that the launch procedure may involve further steps performed by the wearable base device 4, in particular under control of the base control unit 48. These further steps may include opening the cover 44, releasing an attachment means 42, and initiating launch from the platform 46 by activating the launching means 47 using additional kinetic energy, or exclusively kinetic energy provided by the launching means 47.

The automated launch procedure initiated by the human operator may further include delaying the start of propulsion means of the unmanned vehicle 2 for a predetermined time or until the unmanned vehicle 2 travelled a predetermined distance.

The unmanned vehicle 2 may now operate autonomously or remotely piloted.

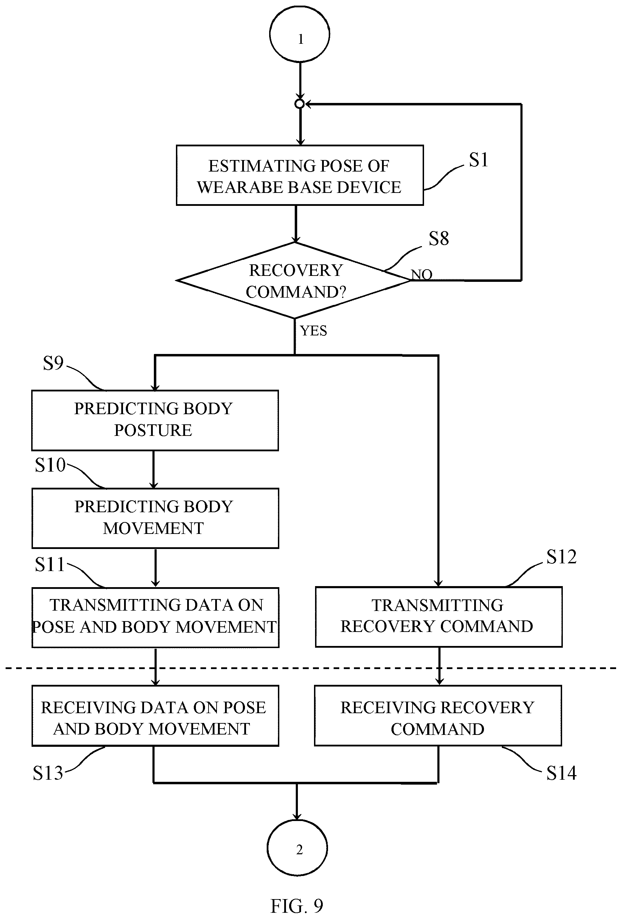

Fig. 9 shows a flowchart describing initiating recovery procedure according to an embodiment.

The unmanned vehicle 2 operates autonomously or remotely piloted in its assigned area of operations, separate from the wearable base device 4. There is a communication link 6 between the first communication unit 41 of the wearable base device 4 and the second communication unit 24 of the unmanned vehicle 2.

Steps S1 and S8 to S12 are steps performed by the wearable base device 4.

In step S1, corresponding to step S1 of fig. 8, the wearable base device 4 estimates the pose of wearable base device 4, in particular using the position determining unit 45 and processing of the base control unit 48.

In step S8, the base control unit 48 determines whether the human operator gave a recovery command based on the estimated pose of the wearable base device 4. If the answer in step S2 is NO, the process returns to step S1 of fig. 9.

If the answer in step S8 is yes, the base control unit 48 of the wearable base device 4 proceeds to steps S9 to S11 and step S12. In particular, the base control unit 48 initiates the recovery procedure for the unmanned vehicle 2 to the wearable base station 4.

In step S9, the base control unit 48 predicts a body posture of the human operator during the recovery procedure.

In step S10, the base control unit 48 predicts a body movement of the human operator during the recovery procedure.

In step S11, the base control unit 48 generates data on the predicted body pose and the predicted body movement, and provides the generated data on the predicted body pose and the predicted body movement to the first communication unit 41. The first communication unit 41 transmits the data on the predicted body pose and the predicted body movement via the communication link 6 to the unmanned vehicle 2.

In step S12, the base control unit 48 generates a recovery command for the unmanned vehicle 2, and provides the recovery command to the first communication unit 41. The first communication unit 41 transmits the recovery command via the communication link 6 to the unmanned vehicle 2.

The unmanned vehicle 2 performs steps S13 and S14 of fig. 9.

The second communication unit 24 of the unmanned vehicle 2 receives the data on the predicted body pose and the predicted body movement via the communication link 6 from the wearable base device 4 in step S13. The processing includes the second communication unit 24 of the unmanned vehicle 2 receiving the recovery command in step S14.

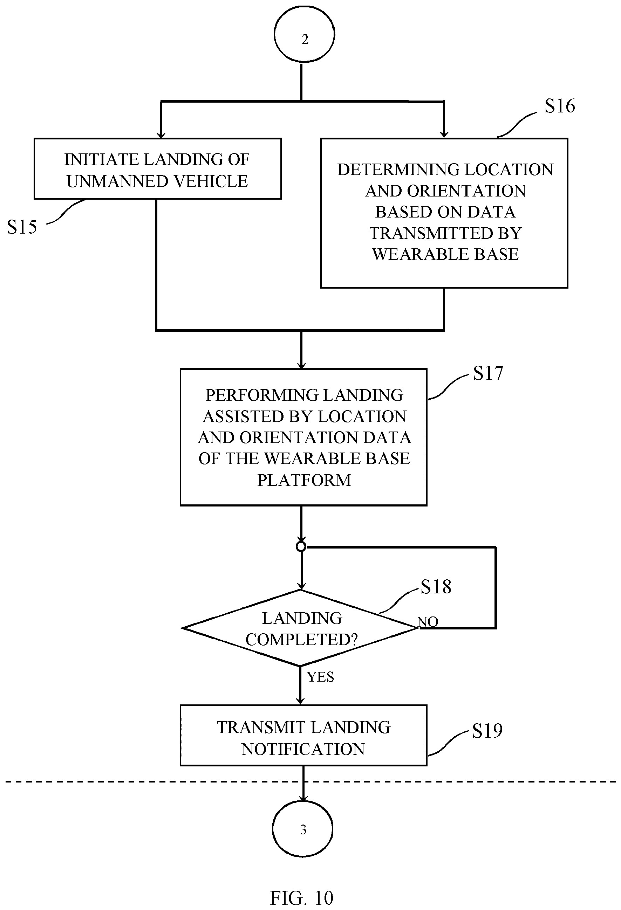

After receiving the recovery command and the data signal including data on the predicted body pose and the predicted body movement, the unmanned vehicle 2 performs the steps S15 to S17 of the flowchart depicted in fig. 10.

Preferably, step S11 executed by the wearable base device 4 and S13 executed by the unmanned vehicle 2 are performed continuously during the recovery procedure, thereby resulting in the wearable base device 4 continuously sharing its data on the predicted body pose and the predicted body movement with the unmanned vehicle 2.

Steps S11 and S13 may comprise sharing the posture model and the movement model by the wearable base device 4 with the unmanned vehicle 2.

Fig. 10 shows a flowchart describing the landing procedure according to an embodiment.

In step S15, the control unit 22 uses the recovery command received by the second communication unit 24 via the communication link 6 from the unmanned wearable base device 4 to initiate landing of the unmanned vehicle 2 at the platform 46 of the wearable base device 4.

In step S16, the control unit 22 determines location and orientation of the wearable base device 4 based on the received data on the predicted body pose and the predicted body movement.

In step S17, the control unit 22 of the unmanned vehicle 2 performs landing of the unmanned vehicle 2 at the platform 46 assisted by the location and orientation data of the wearable base device 4.

In particular, the control unit 22 may us a shared posture model for avoiding a collision of the unmanned vehicle 2 with the body of the human operator.

Furthermore, the control unit 22 may use a shared movement model of the human operator for avoiding a collision of the unmanned vehicle 2 with the body of the human operator during the landing phase of the recovery procedure, and for planning a suitable landing trajectory or landing path 5.

In step S18, the control unit 22 determines whether the landing of the unmanned vehicle 2 at the platform 46 is completed. If the landing is completed, the processing proceeds to step S19.

In step S19, the control unit 2 generates a landing notification message, and provides the landing notification message to the second communication unit 24 for transmission via the communication link 6 to the wearable base device 4.

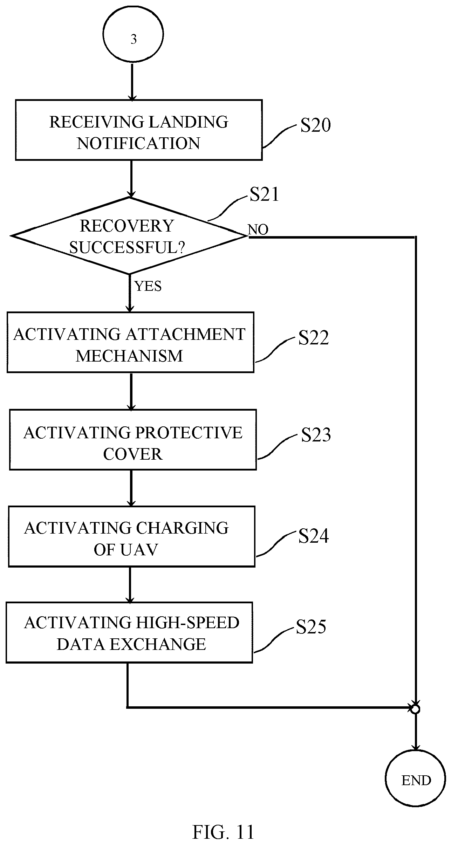

The processing proceeds in fig. 11 depicting a flowchart for concluding the recovery procedure according to an embodiment. The wearable base device 4 performs steps S20 to S25.

In step S20, first communication unit 41 receives the landing notification message via the communication link 6 from the unmanned vehicle 2.

In step S21, the base control unit 48 may verify with its own sensors whether a successful landing occurred at the platform 46. If the answer in step S21 is NO the recovery procedure is terminated with a failure of recovery message to the human operator.

If step S21 returns YES, a successful recovery of the unmanned vehicle 2 is confirmed, the base control unit 48 may perform one or plural of the optional steps S22 to S25 before terminating the recovery procedure successfully.

In step S22, the base control unit 48 activates and controls the attachment means controls to fixate the unmanned vehicle 2 at the platform 46.

In step S23 the base control unit 48 activates and controls the cover 44 to protect the unmanned vehicle 2 at the platform 46 from the environment.

In step S24, the base control unit 48 activates and controls charging of the energy storage unit 23 of the unmanned vehicle 2.

In step S25, the base control unit 48 activates and controls a data exchange between base station interface of the unmanned vehicle 2 and the unmanned vehicle interface 20 of the wearable base device 4.

Embodiments are illustrated and escribed primarily with reference to an unmanned aerial vehicle. The invention defined in the claims is not limited to unmanned aerial vehicles, but is useful for a wide variety of unmanned vehicles 2 in many different areas of applications including recreational and professional use.

The unmanned vehicle 2 may interact with the wearable base device 4 of the system 1, which include a platform worn on the body of the human operator in an analogous manner in different environments. The unmanned vehicle 2 may include unmanned water vehicles or underwater vehicles that can launch and being recovered to a wearable base device 4 worn by a swimmer or a diver. Another class are unmanned vehicles 2 operating in space. These examples include unmanned vehicles 2 moving inside a space station or a larger space vehicle, while an astronaut wears the wearable base device 4. Outside the space station or large space vehicle in space, the wearable base device 4 may be formed integrated with a space suit of the astronaut. Additionally or alternatively, the wearable base device 4 may be attached to the space suit by using straps, tape, or similar fastening means.

For example, a mountain climber may wear the wearable base device 4 with the platform 46 in order to have a camera-equipped quadcopter available on demand without needing free hands to get the quadcopter ready and airborne.

The system 1 is particularly useful for a wide variety of applications, in which an unmanned aerial vehicle gathers information from different viewpoints and locations. Particularly those application areas that require a fast operation of an unmanned aerial vehicle on the one hand, and in which the human operator of the system 1 lacks free hands, a location available for readying and starting the unmanned aerial vehicle, or time to unpack and launch the unmanned aerial vehicle, may benefit from the system 1. Operators of the system 1 may therefore in particular include firefighters, construction workers, soldiers, police officers, and search and rescue teams. Livestock farming and agriculture may provide other use cases for advantageously using the system 1 including the unmanned vehicle 2 and the wearable base device 4. The unmanned aerial vehicle 2 enables acquiring a visual aerial overview, or to scan for signs of live using its sensor suite, which usually includes imaging sensors. This is a characteristic task for applying camera-equipped unmanned aerial vehicles 2 in firefighting and search and rescue operations.

## Claims

1. A system comprising an unmanned vehicle (2) and a wearable base device (4) for the unmanned vehicle (2), wherein
the wearable base device (4) comprises
a position determining unit (45) configured to determine a first position information and a second position information, and
a first communication unit (41) configured to transmit the first position information or a launch signal generated based on the first position information, and the second position information or a return signal generated based on the second position information to the unmanned vehicle (2), and
the unmanned vehicle (2) comprises a second communication unit (24) configured to receive the first position information or the launch signal, and the second position information or the return signal,
wherein the unmanned vehicle (2) is configured to perform an autonomous launch manoeuvre of the unmanned vehicle (2) from the wearable base device (4) in response to receiving the first position information or the launch signal, and to perform an autonomous landing manoeuvre of the unmanned vehicle (2) at the wearable base device (4) in response to receiving the second position information or the return signal, and the system is **characterized in**
**that** the first position information corresponds to a first position of the wearable base device (4) relative to a body of a person wearing the wearable base device (4), and
the second position information corresponds to a second position of the wearable base device (4) relative to the body of the person wearing the wearable base device (4).

2. The system according to claim 1, wherein
at least one of the wearable base device (4) and the unmanned vehicle (2) is configured to determine a posture of the person, and to determine a posture model of the person based on the determined posture of the person for a collision-free path planning of the unmanned vehicle (2) during the autonomous landing manoeuvre and the autonomous launch manoeuvre.

3. The system according to claim 1 or 2, wherein
at least one of the wearable base device (4) and the unmanned vehicle (2) is configured to determine a movement of the person, and to determine a movement model of the person based on the determined movement of the person for a collision-free path planning of the unmanned vehicle (2) during the autonomous landing manoeuvre and the autonomous launch manoeuvre.

4. The system according to any of the preceding claims, wherein
the system is configured to select an approach path of the unmanned vehicle (2) towards the person wearing the wearable base device (4), which is adapted to enable an early visual and/or audible detection of the approaching wearable base device (4) by the person.

5. The system according to claim 4, wherein
the selected approach path of the unmanned vehicle (2) towards the person wearing the wearable base device (4) is configured to approach the person from a front side of a head of the person and maintains a minimum distance towards the ears of the person.

6. The system according to any of the preceding claims, wherein
the position determining unit (45) includes at least one of an accelerometer sensor, a gyroscope and a time-of-arrival sensor.

7. The system according to any of the preceding claims, wherein
the unmanned vehicle (2) is configured to perform the autonomous launch manoeuvre and the autonomous landing manoeuvre at the wearable base device (4) of the person (7) and at least one further wearable base device (4) worn by at least one other person (8).

8. The system according to any of the preceding claims, wherein
the unmanned vehicle (2) is configured to perform the autonomous launch manoeuvre and the autonomous landing manoeuvre on the wearable base device (4,4.1) and at least one further wearable base device (4, 4.2) worn by the person.

9. The system according to any of the preceding claims, wherein
the unmanned vehicle (2) is configured to share the wearable base device (4, 4.1) with at least one other unmanned vehicle (9).

10. The system according to any of the preceding claims, wherein
the wearable base device (4) includes a charging means (43) configured to charge an energy storage (23) of the unmanned vehicle (2).

11. The system according to any of the preceding claims, wherein
the wearable base device (4) is configured to connect with an auxiliary energy storage.

12. The system according to any of the preceding claims, wherein
the wearable base device (4) comprises attachment means (42) configured to mechanically connect the unmanned vehicle (2) to the wearable base device (4).

13. The system according to claim 12, wherein
the attachment means (42) is configured to attach the unmanned vehicle (2) to the wearable base device (4) automatically and/or actively, in particular the attachment means (42) includes a gripping member or an electromagnet.

14. The system according to any one of claims 12 or 13, wherein
the attachment means (42) includes an electric connecting means configured to electrically connect the unmanned vehicle (2) with the wearable base device (4) for data transfer, in particular for a high speed data transfer.

15. The system according to any one of the preceding claims, wherein
the wearable base device (4) comprises a cover (44) configured to cover the unmanned vehicle (2) in an attached position to the wearable base device (4).

16. The system according claim 15, wherein
the cover (44) is configured to automatically and/or actively cover or uncover the unmanned vehicle (2) in an attached position to the wearable base device (4).

17. The system according to any one of the preceding claims, wherein
the wearable base device (4) comprises a launching means (47) configured to at least support the unmanned device (2) during take-off by applying kinetic energy to the unmanned device (2).

18. The system according to any one of the preceding claims, wherein
the unmanned device (2) is an unmanned aerial device, an unmanned water vehicle, an unmanned underwater vehicle, or an unmanned space vehicle.

## Patentansprüche

1. Ein System mit einem unbemannten Fahrzeug (2) und einer tragbaren Basisvorrichtung (4) für das unbemannte Fahrzeug (2), wobei
die tragbare Basisvorrichtung (4) aufweist:
eine Positionsbestimmungseinheit (45), ausgebildet, um eine erste Positionsinformation und eine zweite Positionsinformation zu bestimmen, und
eine erste Kommunikationseinheit (41), ausgebildet, um die erste Positionsinformation oder ein auf der Grundlage der ersten Positionsinformation erzeugtes Start-Signal und die zweite Positionsinformation oder ein auf der Grundlage der zweiten Positionsinformation erzeugtes Return-Signal an das unbemannte Fahrzeug (2) zu übertragen, und wobei
das unbemannte Fahrzeug (2) eine zweite Kommunikationseinheit (24) aufweist, die so ausgebildet ist, dass sie die erste Positionsinformation oder das Start-Signal und die zweite Positionsinformation oder das Return-Signal empfängt,
wobei das unbemannte Fahrzeug (2) so ausgebildet ist, dass es, als Reaktion auf den Empfang der ersten Positionsinformation oder des Start-Signals, ein autonomes Startmanöver des unbemannten Fahrzeugs (2) von der tragbaren Basisvorrichtung (4) aus durchführt, und, als Reaktion auf den Empfang der zweiten Positionsinformation oder des Return-Signals, ein autonomes Landemanöver des unbemannten Fahrzeugs (2) an der tragbaren Basisvorrichtung (4) durchführt, wobei das System **dadurch gekennzeichnet ist, dass**
die erste Positionsinformation einer ersten Position der tragbaren Basisvorrichtung (4) relativ zu einem Körper einer die tragbare Basisvorrichtung (4) tragenden Person entspricht, und die zweite Positionsinformation einer zweiten Position der tragbaren Basisvorrichtung (4) relativ zum Körper der die tragbare Basisvorrichtung (4) tragenden Person entspricht.

2. Das System nach Anspruch 1, wobei
die tragbare Basisvorrichtung (4) und/oder das unbemannte Fahrzeug (2) ausgebildet ist, um eine Körperhaltung der Person zu bestimmen, und um, auf Grundlage der bestimmten Körperhaltung der Person, für eine kollisionsfreie Trajektorien-Planung des unbemannten Fahrzeugs (2) während des autonomen Landemanövers und des autonomen Startmanövers ein Körperhaltungsmodell der Person zu bestimmen.

3. Das System nach Anspruch 1 oder 2, wobei
die tragbare Basisvorrichtung (4) und/oder das unbemannte Fahrzeug (2) ausgebildet ist, um eine Bewegung der Person zu bestimmen, und um, auf Grundlage der bestimmten Bewegung der Person, für eine kollisionsfreie Trajektorien-Planung des unbemannten Fahrzeugs (2) während des autonomen Landemanövers und des autonomen Startmanövers ein Bewegungsmodell der Person zu bestimmen.

4. Das System nach einem der vorherigen Ansprüche, wobei
das System so ausgebildet ist, dass es einen Näherungspfad des unbemannten Fahrzeugs (2) zu der die tragbare Basisvorrichtung (4) tragenden Person auswählt, der geeignet ist, eine frühzeitige visuelle und/oder akustische Erkennung der sich nähernden tragbaren Basisvorrichtung (4) durch die Person zu ermöglichen.

5. Das System nach Anspruch 4, wobei
der ausgewählte Näherungspfad des unbemannten Fahrzeugs (2) zu der die tragbare Basisvorrichtung (4) tragenden Person so ausgebildet ist, dass sich dieses der Person von der Vorderseite deren Kopfes nähert und einen Mindestabstand zu deren Ohren einhält.

6. Das System nach einem der vorherigen Ansprüche, wobei
die Positionsbestimmungseinheit (45) einen Beschleunigungssensor und/oder ein Gyroskop und/oder einen Ankunftszeitsensor umfasst.

7. Das System nach einem der vorherigen Ansprüche, wobei
das unbemannte Fahrzeug (2) ausgebildet ist, um das autonome Startmanöver und das autonome Landemanöver an der tragbaren Basisvorrichtung (4) der Person (7) und an zumindest einer weiteren, von zumindest einer anderen Person (8) getragenen tragbaren Basisvorrichtung (4) durchzuführen.

8. Das System nach einem der vorherigen Ansprüche, wobei
das unbemannte Fahrzeug (2) ausgebildet ist, um das autonome Startmanöver und das autonome Landemanöver auf der tragbaren Basisvorrichtung (4, 4.1) und auf zumindest einer weiteren von der Person getragenen tragbaren Basisvorrichtung (4, 4.2) durchzuführen.

9. Das System nach einem der vorherigen Ansprüche, wobei
das unbemannte Fahrzeug (2) ausgebildet ist, um die tragbare Basisvorrichtung (4, 4.1) mit zumindest einem anderen unbemannten Fahrzeug (9) zu teilen.

10. Das System nach einem der vorherigen Ansprüche, wobei
die tragbare Basisvorrichtung (4) eine zum Aufladen eines Energiespeichers (23) des unbemannten Fahrzeugs (2) ausgebildete Ladeeinrichtung (43) enthält.

11. Das System nach einem der vorherigen Ansprüche, wobei
die tragbare Basisvorrichtung (4) ausgebildet ist, um mit einem zusätzlichen Energiespeicher verbunden zu werden.

12. Das System nach einem der vorherigen Ansprüche, wobei
die tragbare Basisvorrichtung (4) eine Befestigungseinrichtung (42) umfasst, ausgebildet, um das unbemannte Fahrzeug (2) mit der tragbaren Basisvorrichtung (4) mechanisch zu verbinden.

13. System nach Anspruch 12, wobei
die Befestigungseinrichtung (42) ausgebildet ist, um das unbemannte Fahrzeug (2) automatisch und/oder aktiv an der tragbaren Basisvorrichtung (4) zu befestigen, wobei die Befestigungseinrichtung (42) insbesondere ein Greifelement oder einen Elektromagneten aufweist.

14. Das System nach einem der Ansprüche 12 oder 13, wobei
die Befestigungseinrichtung (42) eine elektrische Verbindungseinrichtung umfasst, ausgebildet, um das unbemannte Fahrzeug (2) mit der tragbaren Basisvorrichtung (4) zur Datenübertragung, insbesondere zur Hochgeschwindigkeitsdatenübertragung, elektrisch zu verbinden.

15. Das System nach einem der vorherigen Ansprüche, wobei
die tragbare Basisvorrichtung (4) eine Abdeckung (44) aufweist, ausgebildet, um das unbemannte Fahrzeug (2) in einer an der tragbaren Basisvorrichtung (4) befestigten Position abzudecken.

16. Das System nach Anspruch 15, wobei
die Abdeckung (44) so ausgebildet ist, dass sie das unbemannte Fahrzeug (2) in einer an der tragbaren Basisvorrichtung (4) befestigten Position automatisch und/oder aktiv abdeckt oder frei legt.

17. Das System nach einem der vorherigen Ansprüche, wobei
die tragbare Basisvorrichtung (4) eine Starteinrichtung (47) aufweist, ausgebildet, um das unbemannte Fahrzeug (2) während des Starts zumindest zu unterstützen, indem es dem unbemannten Fahrzeug (2) kinetische Energie zuführt.

18. Das System nach einem der vorherigen Ansprüche, wobei
das unbemannte Fahrzeug (2) ein unbemanntes Fluggerät, ein unbemanntes Wasserfahrzeug, ein unbemanntes Unterwasserfahrzeug oder ein unbemanntes Raumfahrzeug ist.

## Revendications

1. Système comprenant un véhicule sans pilote (2) et un dispositif de base pouvant être porté (4) pour le véhicule sans pilote (2), dans lequel
le dispositif de base pouvant être porté (4) comprend
une unité de détermination de position (45) configurée pour déterminer une première information de position et une deuxième information de position, et
une première unité de communication (41) configurée pour transmettre la première information de position ou un signal de lancement généré sur la base de la première information de position, et la deuxième information de position ou un signal de retour généré sur la base de la deuxième information de position au véhicule sans pilote (2), et
le véhicule sans pilote (2) comprend une deuxième unité de communication (24) configurée pour recevoir la première information de position ou le signal de lancement, et la deuxième information de position ou le signal de retour,
dans lequel le véhicule sans pilote (2) est configuré pour réaliser une manoeuvre de lancement autonome du véhicule sans pilote (2) à partir du dispositif de base pouvant être porté (4) en réponse à la réception de la première information de position ou du signal de lancement, et pour réaliser une manoeuvre d'atterrissage autonome du véhicule sans pilote (2) au niveau du dispositif de base pouvant être porté (4) en réponse à la réception de la deuxième information de position ou du signal de retour, et le système est
**caractérisé en**
**ce que** la première information de position correspond à une première position du dispositif de base pouvant être porté (4) par rapport à un corps d'une personne portant le dispositif de base pouvant être porté (4), et
la deuxième information de position correspond à une deuxième position du dispositif de base pouvant être porté (4) par rapport au corps de la personne portant le dispositif de base pouvant être porté (4).

2. Système selon la revendication 1, dans lequel
au moins un parmi le dispositif de base pouvant être porté (4) et le véhicule sans pilote (2) est configuré pour déterminer une posture de la personne, et pour déterminer un modèle de posture de la personne sur la base de la posture déterminée de la personne pour une planification de trajectoire sans collision du véhicule sans pilote (2) durant la manoeuvre d'atterrissage autonome et la manoeuvre de lancement autonome.

3. Système selon la revendication 1 ou 2, dans lequel
au moins un parmi le dispositif de base pouvant être porté (4) et le véhicule sans pilote (2) est configuré pour déterminer un mouvement de la personne, et pour déterminer un modèle de mouvement de la personne sur la base du mouvement déterminé de la personne pour une planification de trajectoire sans collision du véhicule sans pilote (2) durant la manoeuvre d'atterrissage autonome et la manoeuvre de lancement autonome.

4. Système selon l'une quelconque des revendications précédentes, dans lequel
le système est configuré pour sélectionner une trajectoire d'approche du véhicule sans pilote (2) vers la personne portant le dispositif de base pouvant être porté (4), qui est adaptée pour permettre une détection visuelle et/ou audible précoce du dispositif de base pouvant être porté (4) qui s'approche par la personne.

5. Système selon la revendication 4, dans lequel
la trajectoire d'approche sélectionnée du véhicule sans pilote (2) vers la personne portant le dispositif de base pouvant être porté (4) est configurée pour s'approcher de la personne à partir d'un côté avant d'une tête de la personne et maintient une distance minimale vers les oreilles de la personne.

6. Système selon l'une quelconque des revendications précédentes, dans lequel
l'unité de détermination de position (45) comprend au moins un parmi un capteur accéléromètre, un gyroscope et un capteur de temps d'arrivée.

7. Système selon l'une quelconque des revendications précédentes, dans lequel
le véhicule sans pilote (2) est configuré pour réaliser la manoeuvre de lancement autonome et la manoeuvre d'atterrissage autonome au niveau du dispositif de base pouvant être porté (4) de la personne (7) et d'au moins un dispositif de base pouvant être porté (4) supplémentaire porté par au moins une autre personne (8).

8. Système selon l'une quelconque des revendications précédentes, dans lequel
le véhicule sans pilote (2) est configuré pour réaliser la manoeuvre de lancement autonome et la manoeuvre d'atterrissage autonome sur le dispositif de base pouvant être porté (4, 4.1) et au moins un dispositif de base pouvant être porté (4, 4.2) supplémentaire porté par la personne.

9. Système selon l'une quelconque des revendications précédentes, dans lequel
le véhicule sans pilote (2) est configuré pour partager le dispositif de base pouvant être porté (4, 4.1) avec au moins un autre véhicule sans pilote (9).

10. Système selon l'une quelconque des revendications précédentes, dans lequel
le dispositif de base pouvant être porté (4) comprend un moyen de charge (43) configuré pour charger un accumulateur d'énergie (23) du véhicule sans pilote (2).

11. Système selon l'une quelconque des revendications précédentes, dans lequel
le dispositif de base pouvant être porté (4) est configuré pour être connecté à un accumulateur d'énergie auxiliaire.

12. Système selon l'une quelconque des revendications précédentes, dans lequel
le dispositif de base pouvant être porté (4) comprend des moyens de fixation (42) configurés pour relier mécaniquement le véhicule sans pilote (2) au dispositif de base pouvant être porté (4).

13. Système selon la revendication 12, dans lequel
le moyen de fixation (42) est configuré pour fixer le véhicule sans pilote (2) au dispositif de base pouvant être porté (4) automatiquement et/ou activement, en particulier le moyen de fixation (42) comprend un élément de préhension ou un électroaimant.

14. Système selon l'une quelconque des revendications 12 ou 13, dans lequel
le moyen de fixation (42) comprend un moyen de connexion électrique configuré pour connecter électriquement le véhicule sans pilote (2) au dispositif de base pouvant être porté (4) pour un transfert de données, en particulier pour un transfert de données à haute vitesse.

15. Système selon l'une quelconque des revendications précédentes, dans lequel
le dispositif de base pouvant être porté (4) comprend un couvercle (44) configuré pour couvrir le véhicule sans pilote (2) dans une position fixée au dispositif de base pouvant être porté (4).

16. Système selon la revendication 15, dans lequel
le couvercle (44) est configuré pour couvrir ou découvrir automatiquement et/ou activement le véhicule sans pilote (2) dans une position fixée au dispositif de base pouvant être porté (4).

17. Système selon l'une quelconque des revendications précédentes, dans lequel
le dispositif de base pouvant être porté (4) comprend un moyen de lancement (47) configuré pour au moins supporter le dispositif sans pilote (2) durant le décollage en appliquant de l'énergie cinétique au dispositif sans pilote (2).

18. Système selon l'une quelconque des revendications précédentes, dans lequel
le dispositif sans pilote (2) est un dispositif aérien sans pilote, un véhicule aquatique sans pilote, un véhicule sous-marin sans pilote, ou un véhicule spatial sans pilote.
